(19) Europäisches Patentamt
European Patent Office
Office européen des brevets

(11) **EP 4 422 138 A1**

(12) **EUROPEAN PATENT APPLICATION**

(43) Date of publication:
**28.08.2024 Bulletin 2024/35**

(21) Application number: **24157255.1**

(22) Date of filing: **13.02.2024**

(51) International Patent Classification (IPC):
**H04L 41/16** (2022.01)    **H04L 43/08** (2022.01)

(52) Cooperative Patent Classification (CPC):
**H04L 41/16; H04L 43/08;** G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 IN 202311013229**

(71) Applicant: **Nokia Technologies Oy
02610 Espoo (FI)**

(72) Inventors:
• **MWANJE, Stephen
  Dorfen (DE)**
• **PRAVINCHANDRA BHATT, Rakshesh
  Bangalore (IN)**
• **F, Clifton
  Leamington Spa (GB)**

(74) Representative: **Nokia EPO representatives
Nokia Technologies Oy
Karakaari 7
02610 Espoo (FI)**

(54) **METHOD, APPARATUS AND COMPUTER PROGRAM**

(57)    There is provided an apparatus that comprises means for determining at least one metric for data quality, the at least one metric for data quality associated with a first data set of a first data source, wherein the first data set is to be used for a machine learning model, and means for analysing the at least one metric for data quality to determine at least one confidence value for the first data set. The apparatus also comprising means for generating, based on the analysis of the at least one metric for data quality, a report comprising information related to the at least one confidence value for the first data set of the first data source.

Figure 5

**Description**

Field

The present application relates to a method, apparatus, and computer program for a wireless communication system.

Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

Summary

According to an aspect, there is provided an apparatus comprising: means for determining at least one metric for data quality, the at least one metric for data quality associated with a first data set of a first data source, wherein the first data set is to be used for a machine learning model; means for analysing the at least one metric for data quality to determine at least one confidence value for the first data set; and means for generating, based on the analysis of the at least one metric for data quality, a report comprising information related to the at least one confidence value for the first data set of the first data source.

In an example, the at least one metric for data quality is calculated using the first data set.

In an example, the apparatus comprises: means for receiving, from a machine learning function, a request for information associated with the first data set of the first data source; and means for based on the receiving, providing, to the machine learning function, at least one of: information associated with the least one confidence value for the first data set for the data source, and ii) the report.

In an example, the apparatus comprises: means for providing the at least one confidence value for the first data set to the machine learning function associated with the machine learning model.

In an example, the means for analysing comprises: means for analysing a plurality of metric for data quality for the first data set to determine a plurality of confidence values, wherein the report comprises information related to the plurality of confidence values.

In an example, the means for generating comprises: means for determining an overall confidence value based on the plurality of confidence values associated with the plurality of metrics for the first data set.

In an example, the means for determining comprises: means for receiving the first data set of the first data source; and means for, based on the received data set, determining the at least one metric for data quality for the first data set.

In an example, the means for determining comprises one of: i) means for providing, to a data store, a request for metrics for data quality, and means for receiving, from the data store, a response comprising the at least one metric for data quality; and ii) means for receiving, from a data quality logger, the at least one metric for data quality.

In an example, the means for analysing comprises: means for comparing the at least one metric for data quality for the first data set to a threshold value; and means for, based on the comparing, determining the at least one confidence value for the first data set.

In an example, the means for analysing comprises: means for determining, for the first data set, a suitability of the first data set to be used for the machine learning model based on at least one of: the at least one metric for data quality, and the at least one confidence value for the first data set; and means for, based on the determining of the suitability, associating the first data set of the first data source with an indication of a suitability of the first data set to be used for the machine learning model.

In an example, the apparatus comprises: means for receiving, from the machine learning function, a request for information associated with the first data set of the first data source for use with the machine learning model; and means for providing, to the machine learning function, a response comprising the indication of the suitability of the first data set to be used for the machine learning model.

In an example, the indication comprises one of: an indication to use the first data set for the machine learning model, and an indication to refrain from using the first data set for the machine learning model.

In an example, the at least one metric for data quality comprises a plurality of metrics for data quality for the first data set, and wherein the means for analysing comprises: means for, for each metric of the plurality of metrics for data quality, determining a respective confidence value for the first data set using the respective metric for data quality; and means for determining the at least one confidence value based on each of the respective confidence values.

In an example, the means for analysing comprises: means for, when the at least one metric for data quality is related to data outliers, performing anomaly analysis for the at least one metric for data quality for the first data set.

In an example, the anomaly analysis comprises: i) comparing the at least one metric for data quality that is related to data outliers to a threshold value, and ii) based on the comparison, assigning, to the first data set, an indication of suitability of the first data set to be used for the machine learning model.

In an example, the anomaly analysis comprises calculating a weighted average for the at least one metric for data quality that is related to data outliers based on at least one weighting value and at least one historic value for the at least one metric for data quality that is related to data outliers for the data source.

In an example, the means for performing comprises: means for quantifying the anomaly analysis by performing a comparison between i) outliers and anomalies in the first data set, and ii) outliers and anomalies of other data sets; and means for determining, based on the comparison, a weighted average number that represents the comparison.

In an example, the means for analysing comprises: means for, when the at least one metric for data quality is related to data statistics, performing statistical analysis with the at least one metric for data quality for the first data set.

In an example, the statistical analysis comprises determining a number of deviations in the at least one metric for data quality that is related to data statistics, and determining whether there is a shift in deviations compared to at least one historic value for the at least one metric for data quality that is related to statistical data for the data source. In an example, the means for performing comprises: means for quantifying the statistical analysis by performing a further comparison between i) statistical data in the first data set, and ii) statistical data of other data sets; and means for determining, based on the comparison, a further weighted average number that represents the further comparison.

In an example, the means for analysing comprises: means for performing stationarity analysis using Augmented Dickey-Fuller tests, wherein a hypothesis and a probability-value are assessed for each data source.

In an example, the means for analysing comprises: means for detecting, based on the at least one metric for data quality, a data poisoning attack.

In an example, the at least one metric for data quality comprises at least one of: a counter for data quality, and a key performance indicator related to data quality.

In an example, the apparatus comprises: means for receiving at least one further metric for data quality, the at least one further metric for data quality associated with a second data set of a second data source, wherein the second data set is to be used for a machine learning model; means for comparing the at least one metric for data quality and the at least one further metric for data quality; and means for updating, based on the comparing, the at least one confidence value for the first data set.

In an example, the first data source is associated with one of: a first cell, and a first user equipment, and wherein the second data source is associated with one of: a second cell, and a second user equipment.

In an example, the apparatus comprises: means for correlating the at least one metric for data quality with security event logs; and means for, based on the correlating, updating the at least one confidence value for the first data set.

In an example, the means for generating comprises: means for generating the report based on at least one of: the anomaly analysis, and the statistical analysis.

In an example, one of: the apparatus is for a data health and security assessment function, the apparatus is comprised in a data health and security assessment function, and the apparatus is a data health and security assessment function.

According to an aspect, there is provided a method comprising: determining at least one metric for data quality, the at least one metric for data quality associated with a first data set of a first data source, wherein the first data set is to be used for a machine learning model; analysing the at least one metric for data quality to determine at least one confidence value for the first data set; and generating, based on the analysis of the at least one metric for data quality, a report comprising information related to the at least one confidence value for the first data set of the first data source.

In an example, the at least one metric for data quality is calculated using the first data set.

In an example, the method comprises: receiving, from a machine learning function, a request for information associated with the first data set of the first data source; and based on the receiving, providing, to the machine learning function, at least one of: information associated with the least one confidence value for the first data set for the data source, and ii) the report.

In an example, the method comprises: providing the at least one confidence value for the first data set to the machine learning function associated with the machine learning model.

In an example, the analysing comprises: analysing a plurality of metric for data quality for the first data set to determine a plurality of confidence values, wherein the report comprises information related to the plurality of confidence values.

In an example, the generating comprises: determining an overall confidence value based on the plurality of confidence values associated with the plurality of metrics for the first data set.

In an example, the determining comprises: receiving the first data set of the first data source; and based on the received data set, determining the at least one metric for data quality for the first data set.

In an example, the determining comprises one of: i) providing, to a data store, a request for metrics for data quality, and receiving, from the data store, a response comprising the at least one metric for data quality; and ii) receiving, from a data quality logger, the at least one metric for data quality.

In an example, the analysing comprises: comparing the at least one metric for data quality for the first data set to a threshold value; and based on the comparing, determining the at least one confidence value for the first data set.

In an example, the analysing comprises: determining, for the first data set, a suitability of the first data set to be used for the machine learning model based on at least one of: the at least one metric for data quality, and the at least one confidence value for the first data set; and based on the determining of the suitability, associating the first data set of the first data source with an indication of a suitability of the first data set to be used for the machine learning model.

In an example, the method comprises: receiving, from the machine learning function, a request for information associated with the first data set of the first data source for use with the machine learning model; and providing, to the machine learning function, a response comprising the indication of the suitability of the first data set to be used for the machine learning model.

In an example, the indication comprises one of: an indication to use the first data set for the machine learning model, and an indication to refrain from using the first data set for the machine learning model.

In an example, the at least one metric for data quality comprises a plurality of metrics for data quality for the first data set, and wherein the analysing comprises: for each metric of the plurality of metrics for data quality, determining a respective confidence value for the first data set using the respective metric for data quality; and determining the at least one confidence value based on each of the respective confidence values.

In an example, the analysing comprises: when the at least one metric for data quality is related to data outliers, performing anomaly analysis for the at least one metric for data quality for the first data set.

In an example, the anomaly analysis comprises: i) comparing the at least one metric for data quality that is related to data outliers to a threshold value, and ii) based on the comparison, assigning, to the first data set, an indication of suitability of the first data set to be used for the machine learning model.

In an example, the anomaly analysis comprises calculating a weighted average for the at least one metric for data quality that is related to data outliers based on at least one weighting value and at least one historic value for the at least one metric for data quality that is related to data outliers for the data source.

In an example, the performing comprises: quantifying the anomaly analysis by performing a comparison between i) outliers and anomalies in the first data set, and ii) outliers and anomalies of other data sets; and determining, based on the comparison, a weighted average number that represents the comparison.

In an example, the analysing comprises: when the at least one metric for data quality is related to data statistics, performing statistical analysis with the at least one metric for data quality for the first data set.

In an example, the statistical analysis comprises determining a number of deviations in the at least one metric for data quality that is related to data statistics, and determining whether there is a shift in deviations compared to at least one historic value for the at least one metric for data quality that is related to statistical data for the data source.

In an example, the performing comprises: quantifying the statistical analysis by performing a further comparison between i) statistical data in the first data set, and ii) statistical data of other data sets; and determining, based on the comparison, a further weighted average number that represents the further comparison.

In an example, the analysing comprises: performing stationarity analysis using Augmented Dickey-Fuller tests, wherein a hypothesis and a probability-value are assessed for each data source.

In an example, the analysing comprises: detecting, based on the at least one metric for data quality, a data poisoning attack.

In an example, the at least one metric for data quality comprises at least one of: a counter for data quality, and a key performance indicator related to data quality.

In an example, the method comprises: receiving at least one further metric for data quality, the at least one further metric for data quality associated with a second data set of a second data source, wherein the second data set is to be used for a machine learning model; comparing the at least one metric for data quality and the at least one further metric for data quality; and updating, based on the comparing, the at least one confidence value for the first data set.

In an example, the first data source is associated with one of: a first cell, and a first user equipment, and wherein the second data source is associated with one of: a second cell, and a second user equipment.

In an example, the method comprises: correlating the at least one metric for data quality with security event logs; and based on the correlating, updating the at least one confidence value for the first data set.

In an example, the generating comprises: generating the report based on at least one of: the anomaly analysis, and the statistical analysis.

In an example, the method is performed by a data health and security assessment function.

According to an aspect, there is provided an apparatus comprising: at least one processor, and at least one memory storing instructions that, when executed by the at least one processor, cause the apparatus to perform: determining at least one metric for data quality, the at least one metric for data quality associated with a first data set of a first data source, wherein the first data set is to be used for a machine learning model; analysing the at least one metric for data quality to determine at least one confidence value for the first data set; and generating, based on the analysis of the at least one metric for data quality, a report comprising information related to the at least one confidence value for the first data set of the first data source.

In an example, the at least one metric for data quality is calculated using the first data set.

In an example, the apparatus is caused to perform: receiving, from a machine learning function, a request for information associated with the first data set of the first data source; and based on the receiving, providing, to the machine learning function, at least one of: information associated with the least one confidence value for the first data set for the data source, and ii) the report.

In an example, the apparatus is caused to perform: providing the at least one confidence value for the first data set to the machine learning function associated with the machine learning model.

In an example, the analysing comprises: analysing a plurality of metric for data quality for the first data set to determine a plurality of confidence values, wherein the report comprises information related to the plurality of confidence values.

In an example, the generating comprises: determining an overall confidence value based on the plurality of confidence values associated with the plurality of metrics for the first data set.

In an example, the determining comprises: receiving the first data set of the first data source; and based on the received data set, determining the at least one metric for data quality for the first data set.

In an example, the determining comprises one of: i) providing, to a data store, a request for metrics for data quality, and receiving, from the data store, a response comprising the at least one metric for data quality; and ii) receiving, from a data quality logger, the at least one metric for data quality.

In an example, the analysing comprises: comparing the at least one metric for data quality for the first data set to a threshold value; and based on the comparing, determining the at least one confidence value for the first data set.

In an example, the analysing comprises: determining, for the first data set, a suitability of the first data set to be used for the machine learning model based on at least one of: the at least one metric for data quality, and the at least one confidence value for the first data set; and based on the determining of the suitability, associating the first data set of the first data source with an indication of a suitability of the first data set to be used for the machine learning model.

In an example, the apparatus is caused to perform: receiving, from the machine learning function, a request for information associated with the first data set of the first data source for use with the machine learning model; and providing, to the machine learning function, a response comprising the indication of the suitability of the first data set to be used for the machine learning model.

In an example, the indication comprises one of: an indication to use the first data set for the machine learning model, and an indication to refrain from using the first data set for the machine learning model.

In an example, the at least one metric for data quality comprises a plurality of metrics for data quality for the first data set, and wherein the analysing comprises: for each metric of the plurality of metrics for data quality, determining a respective confidence value for the first data set using the respective metric for data quality; and determining the at least one confidence value based on each of the respective confidence values.

In an example, the analysing comprises: when the at least one metric for data quality is related to data outliers, performing anomaly analysis for the at least one metric for data quality for the first data set.

In an example, the anomaly analysis comprises: i) comparing the at least one metric for data quality that is related to data outliers to a threshold value, and ii) based on the comparison, assigning, to the first data set, an indication of suitability of the first data set to be used for the machine learning model.

In an example, the anomaly analysis comprises calculating a weighted average for the at least one metric for data quality that is related to data outliers based on at least one weighting value and at least one historic value for the at least one metric for data quality that is related to data outliers for the data source.

In an example, the performing comprises: quantifying the anomaly analysis by performing a comparison between i) outliers and anomalies in the first data set, and ii) outliers and anomalies of other data sets; and determining, based on the comparison, a weighted average number that represents the comparison.

In an example, the analysing comprises: when the at least one metric for data quality is related to data statistics, performing statistical analysis with the at least one metric for data quality for the first data set.

In an example, the statistical analysis comprises determining a number of deviations in the at least one metric for data quality that is related to data statistics, and determining whether there is a shift in deviations compared to at least one historic value for the at least one metric for data quality that is related to statistical data for the data source.

In an example, the performing comprises: quantifying the statistical analysis by performing a further comparison between i) statistical data in the first data set, and ii) statistical data of other data sets; and determining, based on the comparison, a further weighted average number that represents the further comparison.

In an example, the analysing comprises: performing stationarity analysis using Augmented Dickey-Fuller tests, wherein a hypothesis and a probability-value are assessed for each data source.

In an example, the analysing comprises: detecting, based on the at least one metric for data quality, a data poisoning attack.

In an example, the at least one metric for data quality comprises at least one of: a counter for data quality, and a key performance indicator related to data quality.

In an example, the apparatus is caused to perform: receiving at least one further metric for data quality, the at least one further metric for data quality associated with a second data set of a second data source, wherein the second data set is to be used for a machine learning model; comparing the at least one metric for data quality and the at least one further metric for data quality; and updating, based on the comparing, the at least one confidence value for the first data set.

In an example, the first data source is associated with one of: a first cell, and a first user equipment, and wherein the second data source is associated with one of: a second cell, and a second user equipment.

In an example, the apparatus is caused to perform: correlating the at least one metric for data quality with security event logs; and based on the correlating, updating the at least one confidence value for the first data set.

In an example, the generating comprises: generating the report based on at least one of: the anomaly analysis, and the statistical analysis.

In an example, one of: the apparatus is for a data health and security assessment function, the apparatus is comprised in a data health and security assessment function, and the apparatus is a data health and security assessment function.

According to an aspect, there is provided an apparatus comprising: first circuitry configured to perform: determining at least one metric for data quality, the at least one metric for data quality associated with a first data set of a first data source, wherein the first data set is to be used for a machine learning model; second circuitry configured to perform: analysing the at least one metric for data quality to determine at least one confidence value for the first data set; and third circuitry configured to perform: generating, based on the analysis of the at least one metric for data quality, a report comprising information related to the at least one confidence value for the first data set of the first data source.

In examples, one or more of the circuitry of the apparatus are configured to perform one or more of the methods as described herein.

According to an aspect, there is provided an computer program comprising instructions, which when executed by an apparatus, cause the apparatus to perform at least: determining at least one metric for data quality, the at least one metric for data quality associated with a first data set of a first data source, wherein the first data set is to be used for a machine learning model; analysing the at least one metric for data quality to determine at least one confidence value for the first data set; and generating, based on the analysis of the at least one metric for data quality, a report comprising information related to the at least one confidence value for the first data set of the first data source.

A non-transitory computer readable medium comprising program instructions, that, when executed by an apparatus, cause the apparatus to perform at least: determining at least one metric for data quality, the at least one metric for data quality associated with a first data set of a first data source, wherein the first data set is to be used for a machine learning model; analysing the at least one metric for data quality to determine at least one confidence value for the first data set; and generating, based on the analysis of the at least one metric for data quality, a report comprising information related to the at least one confidence value for the first data set of the first data source.

A computer product stored on a medium may cause an apparatus to perform the methods as described herein.

A non-transitory computer readable medium comprising program instructions, that, when executed by an apparatus, cause the apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

List of abbreviations:

AF:          Application Function

| AI: | Artificial intelligence |
| --- | --- |
| AMF: | Access and Mobility Management Function |
| AN: | Access Network |
| BS: | Base Station |
| CN: | Core Network |
| DL: | Downlink |
| eNB: | eNodeB |
| gNB: | gNodeB |
| IoT: | Internet-of-things |
| IIoT: | Industrial Internet-of-Things |
| KPI: | Key performance indicator |
| LTE: | Long Term Evolution |
| MDAS: | Management data analytics services |
| ML: | Machine learning |
| MS: | Mobile Station |
| NEF: | Network Exposure Function |
| NG-RAN: | Next Generation Radio Access Network |
| NF: | Network Function |
| NR: | New Radio |
| NRF: | Network Repository Function |
| NW: | Network |
| NWDAF: | Network data analytics function |
| PCF | Policy Control Function |
| PLMN: | Public Land Mobile Network |
| RAN: | Radio Access Network |
| RF: | Radio Frequency |
| SMF: | Session Management Function |
| UE: | User Equipment |
| UDR: | Unified Data Repository |
| UDM: | Unified Data Management |
| UL: | Uplink |
| UPF: | User Plane Function |
| 3GPP: | 3rd Generation Partnership Project |
| 5G: | 5th Generation |
| 5GC: | 5G Core network |
| 5G-AN: | 5G Radio Access Network |
| 5GS: | 5G System |

Description of Figures

Embodiments will now be described, by way of example only, with reference to the accompanying Figures in which:

Figure 1 shows a schematic representation of a 5G system;
Figure 2 shows a schematic representation of a control apparatus;
Figure 3 shows a schematic representation of a terminal;
Figure 4 shows a schematic representation of a system, for the training and the inference of a machine learning model, which considers data quality;
Figure 5 shows an example signalling diagram between data sources and other entities;
Figure 6 shows an example signalling diagram between a data health and security assessment function and other entities;
Figures 7a and 7b show graphic representations of examples of data boundary shifting;
Figure 8 shows an example method flow diagram performed by an apparatus; and
Figure 9 shows a schematic representation of a non-volatile memory medium storing instructions which when executed by a processor allow a processor to perform one or more of the steps of the method of Figure 8.

Detailed description

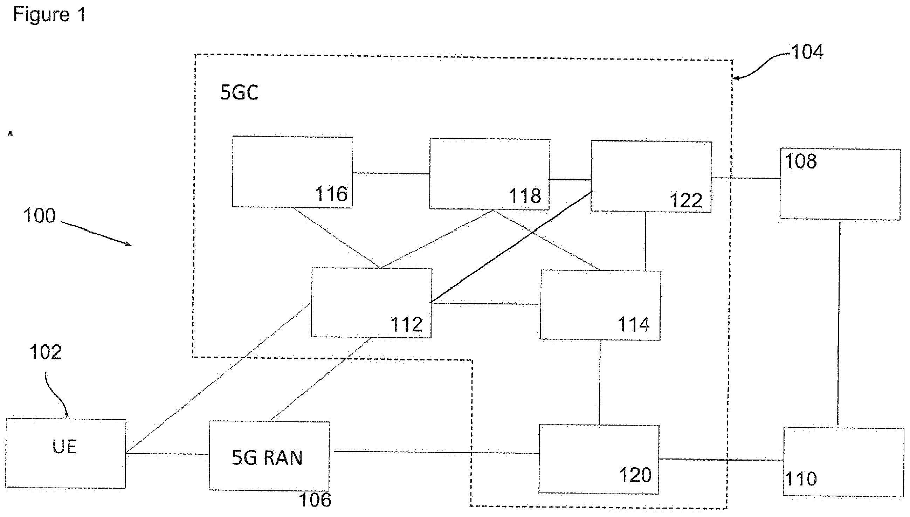

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices. Before explaining in detail the examples of the disclosure, certain general principles of a wireless communication system, access systems thereof, and mobile communication devices are briefly explained with reference to Figures 1, 2 and 3 to assist in understanding the technology underlying the described examples.

Figure 1 shows a schematic representation of a wireless communication system 100. The wireless communication system 100 may comprise one more devices 102 such as user equipments (UEs), or terminals. The wireless communication system 100 may also comprise a 5G system (5GS), as shown in Figure. The 5GS comprises a 5G radio access network (5G-RAN) 106, a 5G core network (5GC) 104 comprising one or more network functions (NF), one or more application functions (AFs) 108, and one or more data networks (DNs) 110.

The 5G-RAN 106 may comprise one or more gNodeB (gNB) distributed unit (DU) functions connected to one or more gNodeB (gNB) centralized unit (CU) functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 5G-advanced, 4G, 3G and other 3GPP standards.

In a wireless communication system 100, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a base station or access point, and transmit and/or receive communications on the carrier.

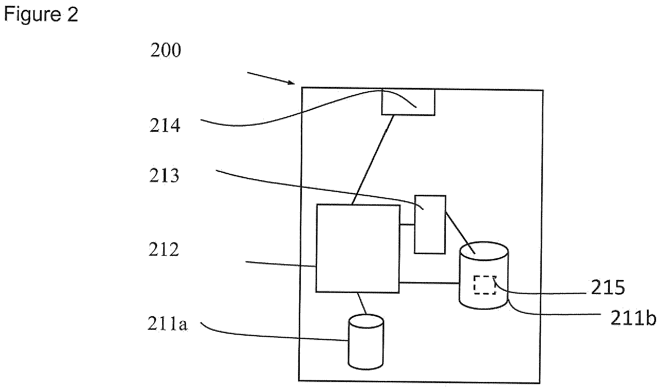

Figure 2 illustrates an example of a control apparatus 200 for controlling a function of the 5G-RAN or the 5GC as illustrated on Figure 1. The control apparatus may comprise at least one random access memory (RAM) 211a, at least one read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects or examples. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus. The control apparatus 200 may comprise one or more circuits, or circuitry (not shown) which may be configured to perform one or more of the present aspects or examples.

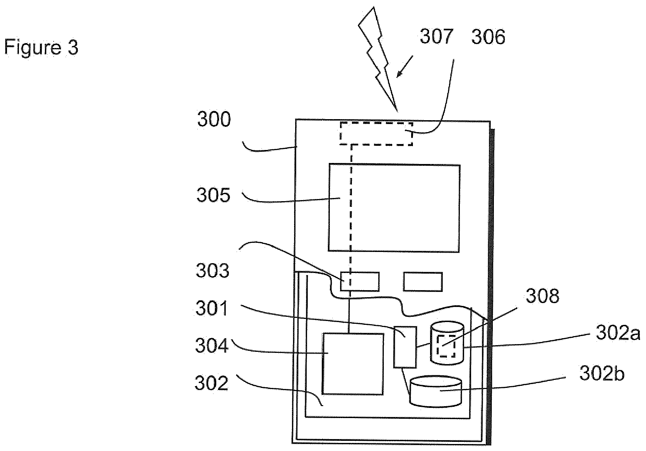

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The terminal 300 may comprise one or more circuits, or circuitry (not shown) which may be configured to perform one or more of the present aspects or examples.

The processor, storage and other relevant control apparatus may be provided on an appropriate circuit, circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more of the following examples are relevant to artificial intelligence (AI) models and machine learning (ML) models. In particular, some examples are related to the quality of data that is used for input into AI and ML models.

AI/ML models are trained with historic input data. The inferences drawn by ML applications depend on the input data. In 5G New Radio and future wireless technologies (e.g. 6G and beyond), AI/ML is expected to play a major role in terms of enabling end-to-end network automations as well as automated network optimizations. 3GPP standards for 5G define the management data analytics service (MDAS) and the network data analytics function (NWDAF) which use different kinds of input data from various network entities to be able to provide statistical, or predictive, analytics services and functionalities.

The input data used by these two analytics entities includes various performance measurement counters and key performance indicators (KPIs) collected from different entities, such as for example, cells, user equipments (UEs), internet-of-things (IoT) devices, and other network functions.

Data related to faults and failures is also consumed by the different analytics functions, which may be dependent upon the use-case specific requirements. In order to meet the expected requirements for different analytics use-cases, it is important to ensure that the quality of input data is good/high.

A data poisoning attack involves tampering with input training data that is provided to an ML model in order to produce undesirable outcomes. An attacker may manipulate a machine learning database and insert incorrect, or misleading information. If an ML model or algorithm learns from manipulated or corrupted data, the model will likely derive unintended and possibly even harmful inferences.

Similarly, ML models may be trained using data collected in UEs, wherein one or more of the UEs are compromised to deliver poisoned data to the ML model during the training phase. Due to this, strict requirements for data quality are important for data collected from UEs that is to be used for ML training.

In a multi-vendor environment, whereby different sources of input data may be provided by different vendors, it will be important for operators (such as mobile network operators) to have a mechanism that allows an assessment of the quality of input data from various data sources. Current standards do not support metrics related to data quality to enable the measurement of data quality for input data to be used for AI/ML.

For example, a compromised data source for an AI/ML model may be sending manipulated/corrupted/damaged/bad data intentionally. In current standards, there no measures or ways to determine whether data received from a source is considered to be safe/valid/good/invalid by an AI/ML pre-processor (or similar). This means that the detection of a data poisoning attack is very difficult. Therefore, an AI/ML model used in networking may utilise this harmful data for the model, resulting in unintended and harmful inferences.

One or more of the examples below aim to address one or more of the problems identified above.

In examples, there is provided an entity (e.g. a data health and security assessor function (DHSAF)) which determines at least one metric for data quality, the at least one metric for data quality associated with a first data set of a first data source, wherein the first data set is to be used for a machine learning model. The entity then analyses the at least one metric for data quality to determine at least one confidence value for the first data set. The entity generates, based on the analysis of the at least one metric for data quality, a report comprising information related to the at least one confidence value for the first data set of the first data source.

An advantage of this is that metrics for data quality are utilised in order to make a determination of whether data from a data source is 'good'/'safe' to be used as input data for an ML model. In this way, the data source is checked to ensure that it is not associated with a data poisoning attack. This will be described in more detail below.

In some examples, the entity may provide, to a machine learning function, information associated with the least one confidence value for the first data set for the data source and/or the report.

In some examples, counters for data quality (also called data quality counters) are used for characterizing the quality of data collected, which is to be used as input for AI/ML solutions. KPIs related to data quality for potential data to be input into an AI/ML model may also be used. The counters for data quality and KPIs for data quality are termed metrics for data quality. Counters are used to represent measurements that count how many times an event occurs. KPIs are a quantifiable measure of performance over time for a specific objective.

In some examples, a data quality logger (DQL) computes, captures, and/or logs the data quality counters and KPIs to characterize the quality of data used for training of AI/ML model, or for inference derivation from a trained AI/ML model. In other example, other suitable entities determine the metrics including counters and/or KPIs.

The data quality counters and KPIs may be derived using statistical analysis executed on the input data at the source of the data. Alternatively, at a pre-processor prior to its use by the AI/ML model. The data quality counters and KPIs (or their logs) may be stored in one or more network performance databases. Multiple AI/ML pipelines may consume different data sets from the network performance database.

Interfaces for logging the data quality counters/KPIs, and for retrieving the data quality counters/KPIs to security analytics functions that evaluate the appropriateness of the source data may be provided. Logging the data quality counters/KPIs may comprises transmitting the counters and KPIs from the logging function to data storage. Retrieving the data quality counters/KPIs may comprise fetching the data quality counters and KPIs from the network performance databases.

In some examples, a data health and security assessor function (DHSAF) analyses metrics for data quality such as data quality counters and KPIs, in order i) to detect potential data poisoning attacks, ii) perform data bias analysis, and/or iii) perform comparative input source analysis. The DHSAF may analyse the metrics to prepare a report of data quality periodically. The period may be configurable to be, for example, once a week, twice a week, once a month, etc.

In some examples, a pre-processor of an ML model or application may interact with the DHSAF and receive input data that has been labelled or categorised based on a determination of a safety on the data. For example, the input may be labelled as 'good' or 'bad' data, or the like. In such scenarios, the pre-processor uses this information in order to eliminate potentially poisoned data.

These examples will all be described in more detail below.

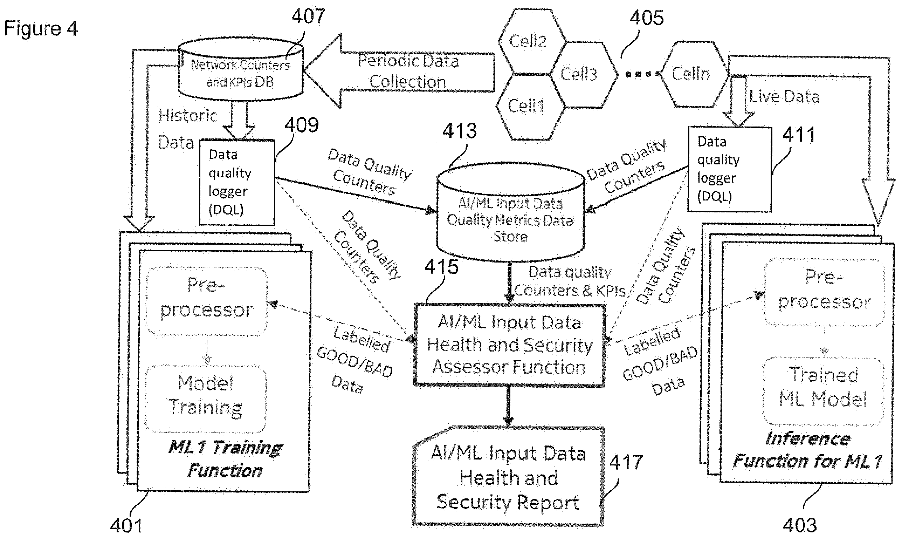

Figure 4 shows a schematic representation of a system, for the training and the inference of a machine learning model, which considers data quality.

The arrows within Figure 4 indicate the movement of data through the system.

The system comprises a machine learning model, which is labelled 'ML1'. ML1 may be used with a training function 401, or for an inference function 403. There are provided a plurality of data sources, which are cells 405 in this example. Periodic data collection from the cells 405 may be stored in a database 407. The database 407 may store counters and KPIs related to data quality. This data to be stored in the database 407 may be termed historic data. A first DQL 409 is in communication with the database 407. Data from the database 407 can be provided to the first DQL 409, and vice versa. Data from the database 407 can also be provided directly to the ML1 training function 401

Live, or real-time, data from the cells 405 may be provided directly to the ML1 inference function 403. The live data from the cells 405 may also be provided to a second DQL 411.

In some examples, the first DQL 409 and the second DQL 411 is the same.

The first DQL 409 and the second DQL 411 communicate with a data store 413. The data store 413 is an AI/ML input data quality metrics data store. The first DQL 409 and the second DQL 411 provide metrics for data quality to the data store 413. The metrics may comprise at least one counter and/or at least one KPI, related to data quality.

The first DQL 409 and the second DQL 411 are also able to communicate directly with a DHSAF 415. The first DQL 409 and the second DQL 411 provide the metrics for data quality to the DHSAF 415.

The DHSAF 415 and the data store 413 are also able to communicate with each other. The DHSAF 415 may request at least one metric for data that is stored in the data store 413. In response to the request, the data store 413 may provide the request metrics to the DHSAF 413.

The DHSAF 415 is configured to analyse the metrics received from the first/second DQL 409, 411 to determine whether the data (being analysed) should be used as an input for ML1. The DHSAF 415 may determine a confidence level/value for the data. The DHSAF 415 may label the data as, for example, good or bad. The label indicating whether the data should be used by the ML1 training function 401 or ML1 inference function 403. It should be understood that the label of 'good' or 'bad' is an example only. In other examples, other suitable labels or indications are used such as, '1' or '0', 'yes' or 'no', a scale between '1' to '5' ('1' being confidently safe), etc.

The DHSAF 415 may communicate with pre-processors of the ML1 training function 401 or the ML1 inference function 403 to provide the analysis of the input data. The pre-processors may use this analysis to determine whether to use the data for ML1. For example, if the input data is labelled as 'good', then the data will be used.

The DHSAF 415 generates a report 417. The report 417 is an AI/ML input data health and security report. Information determined by the DHSAF 415 related to the metrics, and the input data may be included in the report 417. As the DHSAF 415 performs further analysis on the input data and/or the metrics the DHSAF 417 may update the report 417. As the DHSAF 415 analyses input data and/or metrics for further (new) data sources, the DHSAF 415 may compare the results of the analysis with the previous data sources, and update the report 417 accordingly.

The DHSAF 415 may provide (or transmit) the generated report 417 to one or more entities. For example, the DHSAF 415 may provide the report 417 to an ML function (e.g. ML1 training function 401, and/or ML1 inference function 403). In other examples, information associated with the report 417 is provided to the ML function.

In some examples, the DHSAF 415 provides the report 417 to one or more operators (e.g. network operators).

At least one of: the ML1 training function 401, the ML1 inference function 403, and the operators may use the received report 417 to determine whether to use the input data for ML related uses. In other examples, an ML function and/or operator may retrieve the report 417 from a memory accessible to the ML function and/or operator.

As previously discussed, a number of metrics may be used to identify or determine data quality. The metrics for data quality may comprise multiple counters and KPIs that are defined for input data quality assessment. In some examples, arrays of counters and/or KPIs may be used by the DHSAF 415, with the number of array elements equal to a number of input sources. This may then be used/computed by the pre-processor of ML1. Table 1 below includes some example metrics for data quality including counters and KPIs. These metrics for data quality may be used in addition to currently used network KPIs.

Table 1: Example metrics for data quality

| Counter/KPI Name | Description | Data Type |
|---|---|---|
| NUM_INVALID_DROP | Absolute number of None / Null / Zero values dropped by AI/ML Pre-processor for every source of input | integer |
| %_Invalid_Drops | (Number of Null/None/Zero values received / Total number of samples received per collection interval) * 100 | Float |
| NUM_OUTLIERS | Anomaly detection-based identification of number of outliers in received input | integer |
| %_OUTLIERS | (Number of outliers / Total number of samples received per collection interval) * 100 | Float |
| FIRST_ORDER_STATISTIC | Average value of input samples received (KPI) | Float |
| SECOND_ORDER_ STATISTIC | Mean-squared value of input samples received (KPI) | Float |
| STD_FIRST_ORDER_ STATISTIC | Standard deviation of mean value (KPI) | Float |
| STD_SECOND_ORDER_ STATISTIC | Standard deviation of second order stat (KPI) | Float |
| P_VALUE_STATIONARITY | p-value which indicates stationarity of data. More negative this value, more stationary is the counter/KPI data | List |
| SKEWNESS MEASURE | A measure of overall skewness of data | List |

In Table 1 there are a number of counters and a number of KPIs, related to data quality. "NUM_INVALID_DROP", "%_Invalid_Drops", "NUM_OUTLIERS", and "%_OUTLIERS" are examples of counters. These metrics are counters because they track of number of instances, i.e. a count. "FIRST_ORDER_STATISTIC", "SECOND_ORDER_STATISTIC", "STD_FIRST_ORDER_STATISTIC", "STD_SECOND_ORDER_ STATISTIC", "P_VALUE_STATIONARITY", and "SKEWNESS_MEASURE" are examples of KPIs.

It should be understood that the metrics of Table 1 is a non-exhaustive list of metrics, and further (or fewer) metrics for data quality may be used.

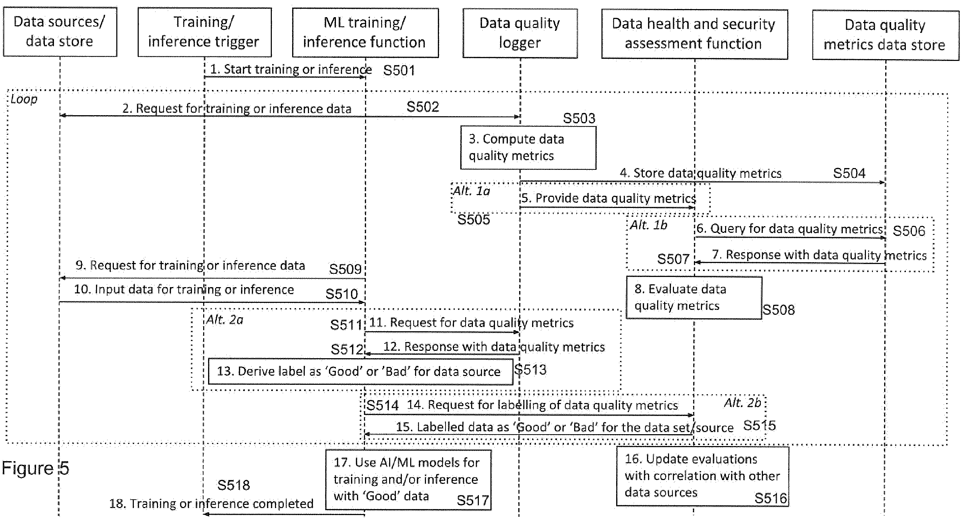

Figure 5 shows an example signalling diagram between data sources and other entities.

At S501, a triggering entity provides a message, or other trigger, to an ML training/inference function (referred to as the ML function).

The following steps of S502 to S515 are looped for each data source.

At S502, a DQL requests data from a data source. The requested data is to be used as input data for an ML model. The data source then provides the requested data to the DQL. In other examples, the DQL retrieves the requested data from an input database. The terms 'data' and 'input data', may be used interchangeably in this context. Herein, the received/retrieves data will be referred to as the 'data set'. The data set is associated with the data source that provided the data.

At S503, the DQL determines/computes metrics for data quality based on the data set. The DQL may determine/compute the metrics for data quality in any suitable manner. The metrics may comprise at least one of: a counter, and a KPI, for data quality. For example, the metrics may comprise one or more of the entries in Table 1. Following the determination/computation, the DQL may log the determined metrics.

In this context, the use of the term "based on" may mean using, utilising, etc.

In some examples, the DQL determines/computes a single metric for data quality.

The determining/computing of the metrics for data quality and logging the data may include an 'online logging'. For online logging, the DQL is configured with characteristics for how to generate counters. For example, how frequently the counters should be generated. For example, every hour, or every data generator, for a set of data generators, etc. Data generators, such as for example base stations, provide input data to the DQL. The input data provides to the DQL shall eventually be used for training the ML model or inferring from the ML model. The DQL determines/tracks the metrics for data quality (e.g. counters) for the input data. The DQL collects the metrics for data quality as configured.

The determining/computing of the metrics for data quality and logging the data may include an 'offline logging'. For offline logging, the DQL receives a request for characteristics for an offline generation of counters. For example, for which objects and time periods are used to generate the metrics for data quality. In other examples, the DQL is configured with the characteristics, rather than receiving them. The DQL then requests for, and retrieves/receives, the data as per the configuration. This may be termed a 'data collection job' for the DQL.

In other examples, the DHSAF determines/computes the metrics for data quality rather than the DQL. In these examples, the DHSAF will receive the data set and determine the metrics for data quality. In some examples, the DHSAF may determine the metrics in the same manner as the DQL, as described for S503. In some examples, the DHSAF calculates at least one metric for data quality using the received data set.

In some examples, a single metric for data quality is determined for the data set. In some examples, a plurality of different metrics for data quality are determined for the data set.

At S504, the DQL stores the determined/computed metrics for data quality for the data set. The DQL may store the metrics in a data store. The data store may be a data quality metrics data store.

At S505, the DQL provides the metrics for data quality for the data set to a DHSAF. In other examples, a single metric for data quality for the data set is provided.

As an alternative to S505, there are S506 and S507.

At S506, the DHSAF provides a request to the data store for the metrics for data quality for the data set.

At S507, the data store provides a response to the DHSAF, the response comprising the requested metrics for data quality for the data set.

At S508, the DHSAF evaluates the received metrics for data quality. The DHSAF may analyse the metric for data quality to determine a confidence value for the data set. Said another way, the DHSAF determines the confidence value for the data set using the metric(s) for data quality.

The DHSAF may evaluate the metrics to determine whether the data set should be used as input data for the ML model. The DHSAF may label the data as either 'good' or 'bad'. The DHSAF may label the data as 'good' or 'bad' based on the determined confidence value. If the data set is labelled as 'good', this may indicate that the ML model may use the data set for training/inference. If the data set is labelled as 'bad', this may indicate that the ML model should cancel training/inference using the data set, or should discard the data set.

The DHSAF may generate a report based on the evaluation/analysis. The report may comprise information related to the evaluation/analysis.

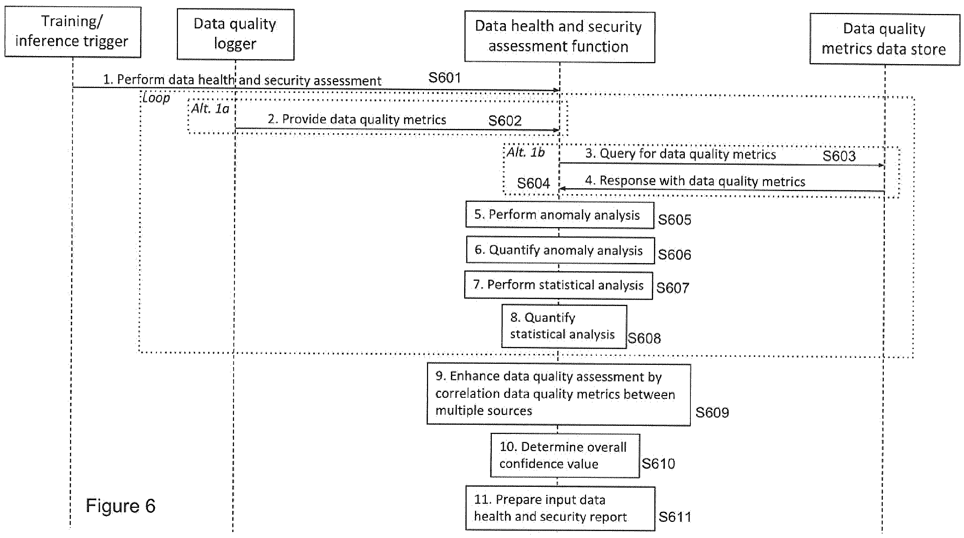

The evaluation/analysis by the DHSAF will be described in more detail below alongside Figure 6.

At S509, the ML function provides a request for data from the data source, for the ML model.

At S510, the data source provides the data set to the ML function. In other examples, the ML function retrieves the data set from an input database.

At S511, the ML function provides a request, to the DQL, for the metrics for data quality for the data set.

At S512, the DQL provides a response, to the ML function, with the metrics for data quality for the data set.

At S513, the ML function derives/determines labels for the data set using the received metrics for data quality.

As an alternative to S511 to S513, there are S514 and S515.

At S514, the ML function provides, to the DHSAF, a request for the evaluation of the metrics for data quality for the data set (performed by the DHSAF). In some examples, the ML function requests the labels for the data set. For example, whether the data set is 'good', or 'bad'.

In some examples, the DHSAF does not perform the evaluation of the metrics (i.e. S508) until the DHSAF receives the request from the ML function. In this case, the DHSAF performs the evaluation of the metrics, in response to the request from the ML function. In this case, processing power at the DHSAF is saved, as the DHSAF analyses the data/metrics only when requested.

At S515, the DHSAF provides, to the ML function, a response message comprising the evaluation of the metrics for data quality for the data set. In some examples, the DHSAF provides a label for the data set. In some examples, the DHSAF provides the data set with the label for the data set. In some examples, the DHSAF provides a suitable indication of whether the data set should be used as input data for the ML model.

S502 to S515 are repeated for each data source that is being used.

At S516, the DHSAF compares the evaluations performed for each data source with each other. The DHSAF may update the determined evaluation for one or more of the data sources based on the comparison.

At S517, the ML function uses the data set for training or inference of the ML model based on the evaluation or labelling of the data. The ML function may use data sets when they are indicated as suitable for use. For example, a data set labelled as 'good'. Data sets that are indicated as unsuitable as input data may not be used, and may be deleted by the ML function.

For example, ten different data sources have been identified for possible use to provide input data for the ML model. Each of the ten data sources provide a data set for evaluation. One of the ten data sources has been evaluated by the ML function or DHSAF as potentially harmful, and is thus labelled 'bad'. The ML function then proceeds to discard the potentially harmful input data from the data source labelled as 'bad', and uses the data from the other nine data sources. It should be understood that this is an example only, to aid in the understanding of the disclosure.

At S518, the ML function provides a message, or other indication, to the triggering entity that the training or inference of the ML model has been completed.

It should be understood that, in some examples, one or more of the steps of Figure 5 may not be performed, or may be performed in a different order.

In examples, a DHSAF analyses the metrics for data quality and generates a report. This report may be named an 'Input data health report'. The report may comprise information about a number of different data sources. In some examples, each data source is a cell. In other examples, other data generating devices are data sources, such as UEs. A group of data sources may be, for example, cells in a given geographical region.

In examples whereby UEs, unmanned aerial vehicles (UAVs), and IoT devices have AI/ML based implementations, and can produce metrics for data quality, then different instances of the DHSAF may be used to evaluate such groups of data sources.

Figure 6 shows an example signalling diagram between a data health and security assessment function (DHSAF) and other entities. The DHSAF may perform one or more steps for evaluating metrics for data quality. This may include at least one of anomaly analysis, and statistical analysis.

At S601, a trigger entity provides a message, or other trigger, to the DHSAF to perform an evaluation/assessment for a data set. The data set is generated by a data source. In other examples, the data set associated with the data source is retrieved from a database.

S602 to S608 are part of a loop. The loop is performed for each data set/data source.

At S602, a DQL provides metrics for data quality for the data set to the DHSAF.

In other examples, the DHSAF computes the metrics for data quality rather than the DQL. In these examples, the DHSAF will receive the data set and determine the metrics for data quality. The DHSAF may determine the metrics in the same manner as the DQL, as described for S503.

As an alternative to S602, there are S603 and S604.

At S603, the DHSAF provides a request to the data store for the metrics for data quality for the data set.

At S604, the data store provides a response to the DHSAF, the response comprising the requested metrics for data quality for the data set.

At S605, the DHSAF analyses/evaluates the received metrics by performing an anomaly analysis.

Counters and KPIs of the metrics that are related to outliers in the data set may be used for this anomaly analysis. For example, i) NUM_INVALID_DROPS, ii) %_Invalid_Drops, iii) NUM_OUTLIERS, %_Outliers (as included in Table 1) may be used by the DHSAF in this anomaly analysis.

In some examples, for the metrics related to outliers, the DHSAF may perform a rule-based analysis. The rule-based analysis may comprise comparing one of the metrics to a threshold value or level. For example, if a number of invalid drops or outliers are greater (or lower) than a threshold value, the data set or data source is labelled 'bad'. Whereas, if the number of invalid drops or outliers are less than (or more than) the threshold value, then the DHSAF labels the data set or data source as 'good'. It should be understood that the label of 'good' or 'bad' is an example only. In other examples, other suitable labels or indications are used such as, '1' or '0', 'yes' or 'no', a scale between '1' to '5' ('1' being confidently safe), etc.

The threshold value may be determined dynamically by considering multiple input data sources. In some examples, multiple levels between 'good' and 'bad' may be defined to arrive at a range of values. For example, a range between 1 and 5, wherein 5 represents a 'BAD' data source (i.e. unusable data) and 1 represents 'VERY GOOD' data source (i.e. safe, usable data).

At S606, the DHSAF performs a comparison between the metrics related to outliers for the data source being evaluated and other data sources. The DHSAF may perform a relative comparison between outliers and/or anomalies for this data source and all other data sources for a collection interval.

The DHSAF may then determine a weighted average number that represents the comparison as a number or value.

In some examples, historic values of these metrics may be analysed to arrive at a representative numerical value. For example, a weighted average of past N samples may be used, and a value calculated with the following equation (equation 1):

$$Weighted\ average\ of\ NUM\ INVALID\ DROPS\ value = \frac{(a_0 X_0 + a_1 X_1 + \ldots a_n X_n)}{(Max(X) - Min(X))}$$

wherein, 'a' values are weights and 'X' are historic metric values. The weights may exponentially reduce from $a_0$ to $a_n$. $X_0$ is the metric from the most recent past (i.e. newest) and $X_n$ is the oldest value. In some examples, a specific number of historic samples to be considered, as well as their associated weights, may be determined using Markovian hypothesis in order to determine the statistically most significant historic samples. In equation 1 above, the weighted average is calculated for the number of invalid drops. It should be understood that this equation may be used to calculate a weighted average for any metric for data quality.

In some examples, the DHSAF may calculate, in a similar manner to equation 1 above, a weighted average for the metric '%_Invalid_Drops', a weighted average for 'NUM_OUTLIERS' and a weighted average for the metric '%_Outliers'. The determined weighted average values may be used to quantify the anomaly analysis such that a final quantified value indicates a higher value for more inconsistent data source, and a lower value for a more reliable and consistent data source.

At S607, the DHSAF analyses/evaluates the received metrics by performing a statistical analysis.

Counters and KPIs of the metrics that are related to statistics in the data set may be used for this statistical analysis. For example, i) FIRST_ORDER_STATISTIC, SECOND_ORDER_ STATISTIC, STD_FIRST_ORDER_ STATISTIC, STD_SECOND_ORDER_ STATISTIC (as included in Table 1) may be used by the DHSAF in this statistical analysis.

In some examples, for the metrics related to statistic, the DHSAF may perform a rule-based analysis. The rule-based analysis may comprise comparing one of the metrics to a threshold value or level. For example, if a value, level, number is greater (or lower) than a threshold value, the data set or data source is labelled 'bad'. Whereas, if the value/level/number are less than (or more than) the threshold value, then the DHSAF labels the data set or data source as 'good'. It should be understood that the label of 'good' or 'bad' is an example only. In other examples, other suitable labels or indications are used such as, '1' or '0', 'yes' or 'no', a scale between '1' to '5' ('1' being confidently safe), etc.

The statistical analysis may comprise determining a number of deviations in first order statistics and may be computed using mean, median, mode analysis of the collected counters/KPIs. One or more of a number of different deviations may be computed for a given data set. Deviations measure how far a certain sample is from another sample. For example, the standard deviation gives the average distance of a specific data set from the mean while the median absolute deviation gives the average distance of the data set from the median. And other deviations may also be computed, where the mean, median, mode, etc are the first order statistics.

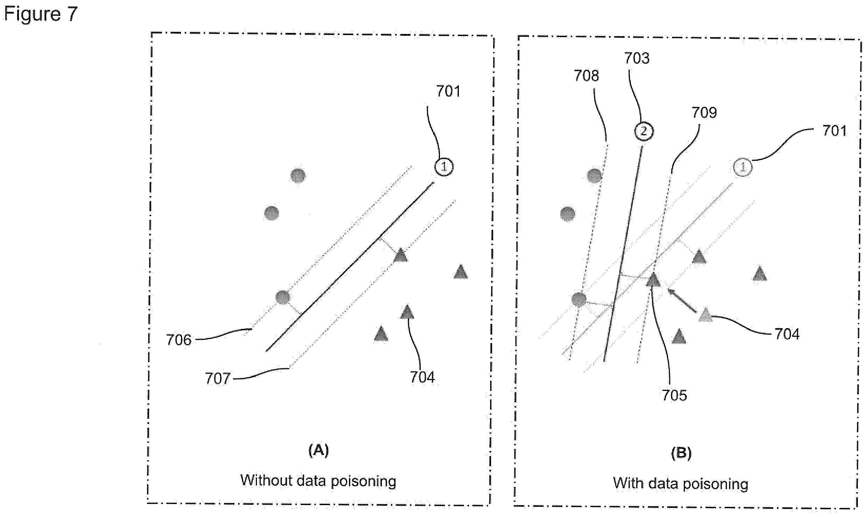

In some example, a gradual shift of mean values, or a gradual shift in second order statistics may be determined by the DHSAF. The gradual shift may be used to determine shifts in input data boundaries. Linear support vector machine (SVM) based boundary detection may be used to determine such gradual shifts in the data set. Figure 7 illustrates such a data boundary shifting, which is described in more detail below.

At S608, the DHSAF performs a comparison between the metrics related to statistics being evaluated and other data sources. The DHSAF may perform a relative comparison between data statistics for this data source and all other data sources for a collection interval. In this way, the comparison may be for data from different sources, but all collected within a same time interval (or 'collection interval').

The DHSAF may then determine a weighted average number that represents the comparison as a number or value. The weighted average may be calculated in a similar manner to equation 1 described above.

In some examples, historic values of these metrics may be analysed to arrive at a representative numerical value.

At S609, the DHSAF performs a determination of any correlation between a plurality of data sources that have been evaluated. S602 to S608 are looped for each data source. Thus, in some examples, the DHSAF evaluates a plurality of data sets/data sources.

The quantified anomaly analysis and the quantified statistical analysis from one data source may be compared with a similar analysis from other data sources. Based on this comparison, the DHSAF may determine and provide a relative numerical value.

For example, if the DHSAF determines that a first data source has consistent input data with respect to its own historic data, but significantly different input data with respect to other similar data sources then the DHSAF may determine that a confidence value the first data source should be lowered in a report. For example, if input data of the first data source is above threshold value in difference to the other similar data sources, then the DHSAF lowers the confidence value of the first data source by a configured amount. A similar data source may be, for example, if the first data source is a cell, then the similar data source is a nearby cell, in a similar location. Data sources such as the first data source may negatively impact the ML model, and hence, should not be considered for training or inference derivations.

At S610, the DHSAF determines, based on at least one of the evaluations, calculations, and analysis for the data set, a confidence value for the data set. For example, the DHSAF may determine, based on at least one of: i) the anomaly analysis, ii) the statistical analysis, and iii) the comparative analysis, a confidence value for the data set. This determination will be described in more detail below alongside Table 2.

At S611, the DHSAF prepares/generates a report comprising information related to the confidence value. In some examples, the report comprises the confidence value. In examples whereby the DHSAF performs an evaluation/analysis for a plurality of different data sources, the report may comprise information for each data source. In an example, the DHSAF analyses a plurality of metric for data quality for a data set for a data source to determine a plurality of confidence values. The report comprises information related to the plurality of confidence values. The DHSAF then determines an overall confidence value based on the plurality of confidence values associated with the plurality of metrics for the data set.

It should be understood that, in some examples, one or more of the steps of Figure 6 may not be performed, or may be performed in a different order.

Figures 7a and 7b show graphic representations of examples of data boundary shifting. Data points in Figures 7a and 7b are represented as circles or triangles. Lines are used to graphically show statistical measures related to the data points.

Figure 7a graphically represents data points without data poisoning. Figure 7b graphically represents data points with data poisoning. In Figure 7a, a first line 701 represents an average/mean value of the data points. In Figure 7b, due to datapoisoning, a second line 703 representing an average/mean of the data, has shifted (or rotated) compared to the first line 701. The first line 701 is also represented in Figure 7b, for reference, to show the difference in the average caused by the data poisoning. The data poisoning is attributed to just one sample value, which is represented by data point 704 in Figure 7a, which has moved to data point 705 in Figure 7b. Similarly, the standard deviation is represented with dotted lines in both Figures 7a and 7b. Without data poisoning Figure 7a, the standard deviation shows a window around the line for average value, shown with dotted lines 706 and 707. With data poisoning, this window of standard deviation has also shifted (or rotated) to dotted lines 708 and 709, in Figure 7b. By moving a single data point (704 to 705), a large delta in the measured average and standard deviation is observed.

In Figure 7a, there is shown first-order statistics 701. The first order statistics may be, for example, an average/mean statistic. Second-order statistics are represented by 706 and 707 in Figure 7a. Second-order statistics are represented by 708 and 709 in Figure 7b. The second order statistics may be, for example, mean squared error statistics. Deviations in these statistics, such as the delta between 701 and 703 seen in Figure 7b, may be used to define support vectors for the input data set. These support vectors may be tracked from historical data in order to determine any gradual drifts.

In other examples, other decision trees, or classifiers, may be used instead of data boundary shifting analysis.

As discussed above, the DHSAF may analyse counters and KPIs with different perspectives. For example, anomaly analysis may consider counters and KPIs related to outliers.

First and second order statistical deviation analysis may determine a statistical deviation of the input data with respect to historical data from the same data source, as well as current data from other similar data sources. For example, this analysis may check if there are UEs from similar locations giving significantly different input data (e.g. radio measurements) to the ML model.

Stationarity analysis may be performed by the DSHAF. Stationarity means that the statistical properties of a process generating a time series do not change over time. Stationarity analysis may be performed using Augmented Dickey-Fuller tests (ADF), wherein the hypothesis and a probability-value (p-value) may be assessed for each data source. ADF tests the null hypothesis that a unit root is present in a time series sample. In this example, the test is stationarity.

A p-value is a statistical measurement used to validate a hypothesis against observed data. A p-value measures the probability of obtaining the observed results, assuming that the null hypothesis is true. The lower the p-value, the greater the statistical significance of the observed difference.

The ADF statistic, used in this test, is a negative number. The more negative the number is, the stronger the rejection of the hypothesis that there is a unit root at some level of confidence. Therefore, the more negative the p-value, the better the stationarity of the input data. In this way, the more negative the p-value, the more suitable it is for the ML model.

From security point of view, any changes in the characteristics of input data from the same source after, for example, a software upgrade, or a temporary outage may be considered suspicious. If a malicious attacker has installed their own software on a particular device, this would show as a temporary outage for that device, followed by change in the data output by that device.

Correlating counters and KPIs in the data with other security event logs, such as for example attempts for un-authenticated or un-authorized access, may help to detect any malicious intruders intending to launch data poisoning attacks.

Table 2 shows an example machine learning input data health report. In other examples, the machine learning input data health report is referred to as the report. The report may be generated by a DHSAF.

Table 2: An example an M: input data health report for a plurality of different data sources.

| Data Analysis | Data Source | | | | | |
|---|---|---|---|---|---|---|
| | Cell1 | Cell2 | Cell3 | UE1 | UE2 | UE3 |
| Anomaly analysis | 1 | 1 | 2 | 1 | 3 | 2 |
| First order stat deviation analysis | 1 | 1 | 3 | 1 | 2 | 1 |
| Second order stat deviation analysis | 1 | 1 | 2 | 2 | 2 | 1 |
| Auto-EDA (exploratory data analysis) output | 1 | 1 | 2 | 2 | 2 | 1 |
| Data correlation and mean, median analysis | 1 | 1 | 2 | 2 | 2 | 1 |
| Stationarity analysis | 1 | 1 | 2 | 1 | 2 | 1 |
| Categorical field first order stat deviation analysis | 2 | 1 | 1 | 1 | 3 | 1 |
| Categorical field second order stat deviation analysis | 1 | 1 | 1 | 2 | 2 | 1 |
| Categorical field stationarity analysis | 1 | 1 | 2 | 1 | 2 | 2 |
| Auto-EDA for categorical fields | 1 | 1 | 2 | 1 | 2 | 2 |
| Data correlation and means, median analysis for categorical fields | 1 | 1 | 2 | 1 | 2 | 2 |
| Overall data confidence value | 98% | 100% | 70% | 80% | 30% | 80% |

For each data source referred to in the report, a number of entries are included. In this example report, each data source has twelve different entries representing twelve different measurements/evaluations/determination. The different measurements/evaluations/determination may be based on at least one metric for data quality for the respective data source. Each of the data sources also has an overall confidence value which is based on the twelve different entries. In some examples, the overall confidence value is determined using all twelve entries. In some examples, one or more of the entries have a weighting value for the determination of the overall confidence value.

It should be understood that the use of twelve different entries per data source is an example only. In other examples, more or less than twelve entries are recorded for each data source. In other examples, only one confidence value is recorded in the report for each data source.

In the example report of Table 2, there are shown six different data sources, including cell 1, cell 2, cell 3, UE 1, UE 2, and UE 3. In this example, the cells and UEs are not associated with one another.

As discussed above, in some examples, a rule-based or threshold-based analysis may be used to determine the different entries in the report. For example, comparing metrics to threshold values, and based on the result, providing an entry in the report. Other ways of determining the entries are discussed above, alongside Figure 6.

Each entry in the report, for each data source, is recorded as one of three discrete options, in the example of Table 2. In this report, the discrete entries are recorded as a '1', '2' or '3'. Here, '1' indicates suitable, and safe data, and '3' indicates unsuitable data. '2' is between '1' and '3'. Each entry may be allocated '1', '2', or '3', based on, for example, measured values for each entry and three ranges. For example, a measured value between 1 and 50 equals group '1', 51 to 500 equals group '2', and 500+ equals group '3', or the like. It should be understood that there may be more or less than 3 discrete levels in other examples. In some examples, each entry in the report, is a numerical value, a discrete value, another suitable indication, or a combination thereof.

An overall data confidence value may be determined for each data source using the entries for that data source. The overall data confidence value may be determined over a specified period of time. This may be done either manually or by an automated function. This may be used to determine if any specific data sources should be deleted/removed from the data inputs provided to the ML model.

In the example of Table 2, the overall confidence value for each data source is represented as a percentage. It other examples, the overall confidence value is represented in any suitable manner.

The confidence value for "UE2" is the lowest of the six data sources. As "UE2" is the lowest, the input data for the "UE2" may not be used for the ML model. In some examples, a rule-based system may be used. For example, if a confidence value is below a threshold value (e.g. below 40%), then the input data for that data source is not used.

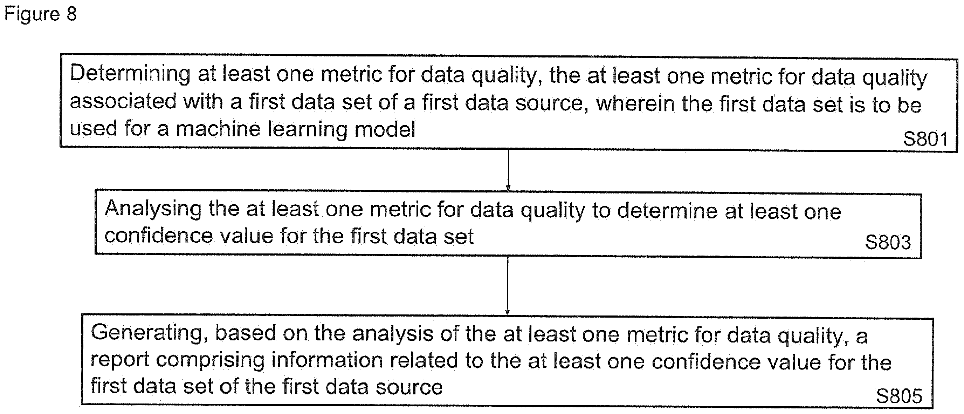

The rows and their labels in Figure 8 are shown as an example only. In other examples, more or less rows, showing different measures/evaluations may be provided in a report.

Below is shown a Table 3 which includes example entries of a 'real-world' measured data set.

Table 3: Measured metrics for a number of data sources

| Time | Cell Name | ERAB_ DROP RATE | DLTraffic _Vol | Avg_Lat _ QC1 | Avg_ Act_ User | %DL_PRB _UTIL |
|---|---|---|---|---|---|---|
| 09:30 UTC | ZQNPPAKFFGD | None | 352718 | 4 | 1.05 | 3.1 |
| 09:30 UTC | 0845986495_DG | 0 | 235478 | 4 | 5.75 | 23.4 |
| 09:30 UTC | ZHJHJDJKKKJD | 0.23746 | 137482 | 7 | 1.09 | 32 |
| 09:30 UTC | 968585FGFVGS | 0.30354 | 9284623 | 3 | 1.67 | 93.1 |
| 09:30 UTC | YYHBSTGVBSH | 0.46382 | 26382 | 12 | 6.42 | 1.6 |
| 09:30 UTC | 657383888_TYH | 1.68483 | 17482 | 9 | 1.1 | 25.4 |
| 09:30 UTC | GTYBSYGEBNM | None | None | None | None | None |

Table 3 shows a sample of data collected from live operator's network. As seen in row, for cell named "GTYBSYGEBNM", there are 'None' values in this data. An AI/ML pre-processor may 'clean-up' such 'none' values in any data before providing it for training or inferences to AI/ML models.

In examples, a metric is provided which may be a counter. The counter may track a count of all 'non' valued data. In some examples, a percentage measure of such 'none' values are tracked.

In Table 3, the %DL_PRB_Util column, shows an example of an outlier. Here, the value 93.1% for the cell named "968585FGFVGS", may be considered an outlier. The determination of an outlier is in respect of previous and next values for the same cell, i.e. the cell named "968585FGFVGS" (not shown in the table). For example, if the value before was 25%, and the next value is 26%, then the value of 93.1% may be considered an outlier. These determined outliers may negatively influence the functionality of an ML model. Therefore, it is important to measure the potential input data to assess the quality of the input data. If such an outliers is determined, from the same data source, a DQL may count such an outliers. A pre-processor may consider removing the outlier (or the whole data set) from the data fed to the ML model.

Below is shown a Table 4 which includes descriptive statistics for downlink traffic volume for a cell.

Table 4: Measured statistics for DLTRAFFIC_VOL for a first cell

| Descriptive Statistics for DLTraffic_Vol | |
|---|---|
| Mean | 4362597840 |
| Standard Error | 133526798 |
| Median | 3593169744 |
| Mode | #N/A |
| Standard Deviation | 3448508905 |

(continued)

| Descriptive Statistics for DLTraffic_Vol | |
|---|---|
| Sample Variance | 1.19E+19 |
| Kurtosis | -0.426935206 |
| Skewness | 0.681630883 |
| Range | 15172593936 |
| Minimum | 2687160 |
| Maximum | 15175281096 |
| Sum | 2.91E+12 |
| Count | 667 |
| Largest(1) | 15175281096 |
| Smallest(1) | 2687160 |
| Confidence Level(95.0%) | 262184184.3 |

Table 4 shows descriptive statistics for 'DLTraffic_Vol', for a first cell. The first cell is considered a data source. These statistics correspond to the DL Traffic_Vol column in the data set shown in Table 3. Metrics such as counters and KPIs may be defined for all of these entries of Table 4, in order to give a better view of the statistical properties of the input data. Support vector-based data boundary analysis may be performed to help determine slow drifts in the input data set from the same source, which can lead to significant changes in AI/ML application behaviour.

One or more of the following examples above enable the assessment of health and security aspects of input data which is to be consumed by AI/ML models. The examples provide a way to detect potentially harmful data, such as bad/poisoned sources of data that can affect the AI/ML applications negatively. The detection of such data before it is input into an AI/ML model means that the harmful outcome is avoided. The examples enable a number of different ways to analyse the data, including rule-based/threshold-based analysis, statistical analysis, and anomaly detection, assessment of the input data. Some examples show analysis and comparison between multiple sources of input data, in order to improve the accuracy of confidence of the analysis. Therefore, this enables the accurate detection of potential data poisoning attacks, in order to take proactive steps to avoid them happening. For example, by deleting or ignoring the potentially harmful data, or not using it for the AI/ML models.

Figure 8 shows an example method flow performed by an apparatus. The apparatus may be for a data health and security assessment function (DHSAF). The apparatus may be comprised in a DHSAF. The apparatus may be a DHSAF.

In S801, the method comprises determining at least one metric for data quality, the at least one metric for data quality associated with a first data set of a first data source, wherein the first data set is to be used for a machine learning model.

In S803, the method comprises analysing the at least one metric for data quality to determine at least one confidence value for the first data set.

In S805, the method comprises generating, based on the analysis of the at least one metric for data quality, a report comprising information related to the at least one confidence value for the first data set of the first data source.

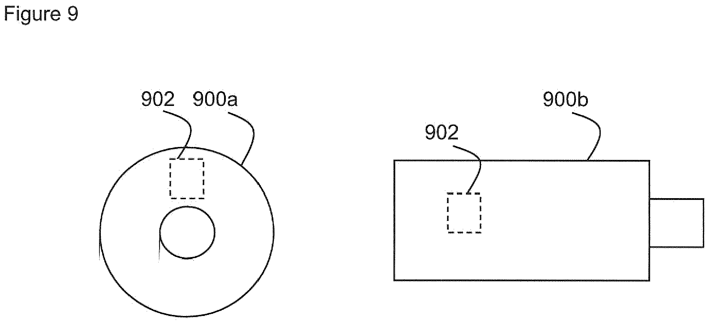

Figure 9 shows a schematic representation of non-volatile memory media 900a (e.g. computer disc (CD), blu-ray disk, or digital versatile disc (DVD)) and 900b (e.g. universal serial bus (USB) memory stick, hard disk drive, solid state hard drive) storing instructions and/or parameters 902 which when executed by a processor allow the processor to perform one or more of the steps of the methods of Figure 8.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto.

While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or", mean at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:

(a) hardware-only circuit implementations (such as implementations in only analogue and/or digital circuitry);
(b) combinations of hardware circuits and software, such as:

(i) a combination of analogue and/or digital hardware circuit(s) with software/firmware and
(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device. The term circuitry also covers, for example and if applicable to the particular claim element, a baseband integrated circuit or processor integrated circuit for a mobile device or a similar integrated circuit in a server, a cellular network device, or other computing or network device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

**Claims**

1. An apparatus comprising:

means for determining at least one metric for data quality, the at least one metric for data quality associated with a first data set of a first data source, wherein the first data set is to be used for a machine learning model;
means for analysing the at least one metric for data quality to determine at least one confidence value for the first data set; and
means for generating, based on the analysis of the at least one metric for data quality, a report comprising information related to the at least one confidence value for the first data set of the first data source.

2. The apparatus according to claim 1, wherein the apparatus comprises:

   means for receiving, from a machine learning function, a request for information associated with the first data set of the first data source; and
   means for based on the receiving, providing, to the machine learning function, at least one of: information associated with the least one confidence value for the first data set for the data source, and ii) the report.

3. The apparatus according to claim 1 or claim 2, wherein the means for determining comprises:

   means for receiving the first data set of the first data source; and
   means for, based on the received data set, determining the at least one metric for data quality for the first data set.

4. The apparatus according to claim 1 or claim 2, wherein the means for determining comprises one of:

   i) means for providing, to a data store, a request for metrics for data quality, and means for receiving, from the data store, a response comprising the at least one metric for data quality; and
   ii) means for receiving, from a data quality logger, the at least one metric for data quality.

5. The apparatus according to any of claims 1 to 4, wherein the means for analysing comprises:

   means for comparing the at least one metric for data quality for the first data set to a threshold value; and
   means for, based on the comparing, determining the at least one confidence value for the first data set.

6. The apparatus according to any of claims 1 to 5, wherein the means for analysing comprises:

   means for determining, for the first data set, a suitability of the first data set to be used for the machine learning model based on at least one of: the at least one metric for data quality, and the at least one confidence value for the first data set; and
   means for, based on the determining of the suitability, associating the first data set of the first data source with an indication of a suitability of the first data set to be used for the machine learning model.

7. The apparatus according to claim 6, wherein the apparatus comprises:

   means for receiving, from the machine learning function, a request for information associated with the first data set of the first data source for use with the machine learning model; and
   means for providing, to the machine learning function, a response comprising the indication of the suitability of the first data set to be used for the machine learning model.

8. The apparatus according to claim 6 or claim 7, wherein the indication comprises one of: an indication to use the first data set for the machine learning model, and an indication to refrain from using the first data set for the machine learning model.

9. The apparatus according to any of claims 1 to 8, wherein the at least one metric for data quality comprises a plurality of metrics for data quality for the first data set, and
   wherein the means for analysing comprises:

   means for, for each metric of the plurality of metrics for data quality, determining a respective confidence value for the first data set using the respective metric for data quality; and
   means for determining the at least one confidence value based on each of the respective confidence values.

10. The apparatus according to any of claims 1 to 9, wherein the means for analysing comprises:
    means for, when the at least one metric for data quality is related to data outliers, performing anomaly analysis for the at least one metric for data quality for the first data set.

11. The apparatus according to claim 10, wherein the anomaly analysis comprises: i) comparing the at least one metric for data quality that is related to data outliers to a threshold value, and ii) based on the comparison, assigning, to the first data set, an indication of suitability of the first data set to be used for the machine learning model.

12. The apparatus according to claim 10 or claim 11, wherein the anomaly analysis comprises calculating a weighted average for the at least one metric for data quality that is related to data outliers based on at least one weighting value and at least one historic value for the at least one metric for data quality that is related to data outliers for the data source.

13. The apparatus according to any of claims 10 to 12 wherein the means for performing comprises:

   means for quantifying the anomaly analysis by performing a comparison between i) outliers and anomalies in the first data set, and ii) outliers and anomalies of other data sets; and
   means for determining, based on the comparison, a weighted average number that represents the comparison.

14. The apparatus according to any of claims 1 to 13, wherein the means for analysing comprises:
   means for, when the at least one metric for data quality is related to data statistics, performing statistical analysis with the at least one metric for data quality for the first data set.

15. The apparatus according to claim 14, wherein the statistical analysis comprises determining a number of deviations in the at least one metric for data quality that is related to data statistics, and determining whether there is a shift in deviations compared to at least one historic value for the at least one metric for data quality that is related to statistical data for the data source.

Figure 1

EP 4 422 138 A1

EP 4 422 138 A1

Figure 2

Figure 3

Figure 4

EP 4 422 138 A1

25

Figure 5

Figure 6

Figure 7

701
704
709
703
708
2
705
(B)
With data poisoning

701
704
(A)
Without data poisoning
706
707

Figure 8

Determining at least one metric for data quality, the at least one metric for data quality associated with a first data set of a first data source, wherein the first data set is to be used for a machine learning model
S801

Analysing the at least one metric for data quality to determine at least one confidence value for the first data set
S803

Generating, based on the analysis of the at least one metric for data quality, a report comprising information related to the at least one confidence value for the first data set of the first data source
S805

EP 4 422 138 A1

Figure 9

Europäisches
Patentamt

European
Patent Office

Office européen
des brevets

# EUROPEAN SEARCH REPORT

**Application Number**

EP 24 15 7255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/184958 A1 (KOLAR VINAY KUMAR [US] ET AL) 17 June 2021 (2021-06-17) | 1,3,4 | INV.<br>H04L41/16<br>H04L43/08 |
| Y | * paragraph [0001] - paragraph [0004] *<br>* paragraph [0014] *<br>* paragraph [0026] *<br>* paragraph [0047] - paragraph [0058] *<br>* paragraph [0066] *<br>* paragraph [0077] - paragraph [0108] *<br>* figure 9 * | 2,5-15 | |
| Y | US 2017/372232 A1 (MAUGHAN JASON [US] ET AL) 28 December 2017 (2017-12-28)<br>* paragraph [0002] *<br>* paragraph [0031] *<br>* paragraph [0039] *<br>* paragraph [0045] *<br>* paragraph [0051] - paragraph [0053] *<br>* paragraph [0062] - paragraph [0064] *<br>* paragraph [0075] *<br>* paragraph [0079] - paragraph [0082] *<br>* paragraph [0090] - paragraph [0095] *<br>* paragraph [0100] - paragraph [0101] * | 2,5-15 | |

**TECHNICAL FIELDS SEARCHED (IPC)**

H04L
G06N

The present search report has been drawn up for all claims

| Place of search | Date of completion of the search | Examiner |
|---|---|---|
| Munich | 1 July 2024 | Donnini, Carlo Luca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 15 7255

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2024

| Patent document cited in search report | Publication date | Patent family member(s) | Publication date |
|---|---|---|---|
| US 2021184958 A1 | 17-06-2021 | US 2021184958 A1<br>US 2022353166 A1 | 17-06-2021<br>03-11-2022 |
| US 2017372232 A1 | 28-12-2017 | EP 3475798 A1<br>US 2017372232 A1<br>WO 2018005489 A1 | 01-05-2019<br>28-12-2017<br>04-01-2018 |

For more details about this annex : see Official Journal of the European Patent Office, No. 12/82